# EUROPÄISCHE PATENTSCHRIFT

(11) **EP 0 608 242 B1**
(45) Veröffentlichungstag und Bekanntmachung des Hinweises auf die Patenterteilung: **18.11.1998**
(21) Anmeldenummer: 92916877.1
(22) Anmeldetag: 07.08.1992
(51) Int. Cl.: B60L 13/03, B60L 15/00

(54) **SYNCHRON-LINEARANTRIEB MIT ELEKTROMAGNETISCHER ENERGIEÜBERTRAGUNG**
SYNCHRONOUS LINEAR DRIVE WITH ELECTROMAGNETIC ENERGY TRANSFER
ENTRAINEMENT LINEAIRE SYNCHRONE A TRANSMISSION D'ENERGIE ELECTROMAGNETIQUE

(30) Priorität: 09.08.1991 DE 4126454
(43) Veröffentlichungstag der Anmeldung: 03.08.1994
(73) Patentinhaber: GRÜNDL UND HOFFMANN GESELLSCHAFT FÜR ELEKTROTECHNISCHE ENTWICKLUNGEN MBH, 82319 Starnberg (DE)
(72) Erfinder: HOFFMANN, Bernhard, D-8130 Starnberg (DE); GRÜNDL, Andreas, D-8000 München 70 (DE)
(74) Vertreter: Klunker . Schmitt-Nilson . Hirsch
(86) Internationale Anmeldenummer: EP9201804
(87) Internationale Veröffentlichungsnummer: WO9302888

(56) Entgegenhaltungen:
- DE-A- 2 257 773
- DE-A- 2 423 579
- IEEE TRANSACTIONS ON MAGNETICS Bd. 28, Nr. 1, Januar 1992, NEW YORK US Seiten 474 - 477 , XP000258042 M.SHIBATA ET AL. 'On-Board Power Supply System of a Magnetically Levitated Vehicle'
- JOURNAL OF THE INSTITUTION OF ELECTRICAL ENGINEERS Bd. 121, Nr. 11R, November 1974, STEVENAGE GB Seiten 1224-1248 A.J.ELLISON ET AL. 'Surface-guided transport systems of the future'

## Beschreibung

Die Erfindung betrifft einen Synchron-Linearantrieb, mit einem vorzugsweise als am Fahrweg angeordneter Langstator ausgebildeten Stator mit Statorwicklungen zur Erzeugung eines Wanderfeldes für den Antrieb des bewegten Teils, und einem vorzugsweise am bewegten Teil vorhandenen Erregerteil mit gleichstromgespeister Erregerwicklung, wobei elektrische Energie zur Bordstromversorgung auf das bewegte Teil induktiv über die Statorwicklungen übertragen wird.

Ein Synchron-Linearantrieb dieser Art ist aus DE-A-22 57 773 und DE-A-24 23 579 bekannt. Hierbei wird die elektrische Energie zur Bordstromversorgung induktiv unmittelbar über das eingespeiste Stator-Wanderfeld in das Fahrzeug eingekoppelt. Dem das Stator-Wanderfeld erzeugenden Wechselstrom wird kein höherfrequenter Wechselstrom zur induktiven Energieübertragung zwischen dem Stator und dem Erregerteil überlagert.

Der Stator kann als sogenannter Langstator ausgebildet sein, während das bewegte Teil, üblicherweise ein Fahrzeug zum Transport von Personen und/oder Gütern, eine Erregerwicklung trägt, in die ein Gleichstrom gespeist wird. Der Antrieb erfolgt mittels des in dem Langstator erzeugten Wanderfeldes. Vorzugsweise ist der Langstator in Abschnitte mit mehrphasigen Wicklungen oder örtlich aufeinanderfolgenden Einphasenwicklungen unterteilt. Die Stromversorgung der Statorabschnitte kann über Umrichter erfolgen.

Die oben geschilderte Anordnung läßt sich auch umkehren, so daß am bewegten Teil der Stator zur Bereitstellung des den Vortrieb bewirkenden Wanderfeldes und die gleichstromgesbeiste Erregerwicklung am Fahrweg angeordnet ist. Im folgenden soll aber zum einfachen Verständnis stets davon ausgegangen werden, daß der Stator als ortsfester Langstator ausgebildet ist, während sich der Erregerteil am bewegten Fahrzeug befindet.

Es sind verschiedene Anordnungen für die berührungslose elektrische Energieübertragung mittels induktiv gekoppelter Wicklungen bekannt. Diese Energieübertragungseinrichtungen kann man als aufgeschnittenen Transformator betrachten, wobei jeweils eine Wicklung auf dem ortsfesten bzw. dem bewegten Teil vorhanden ist. Zwischen den relativ zueinander bewegten Teilen existiert zwangsläufig ein Luftspalt, der naturgemäß eine Verschlechterung der für die Leistung kennzeichnenden Datenwerte bedingt, verglichen mit einem herkömmlichen Transformator. Die Hauptinduktivität bei der induktiven Kopplung zwischen ortsfestem und bewegtem Teil ist verhältnismäßig klein, die Streuinduktivitäten hingegen sind sehr groß. Dadurch ergibt sich ein relativ hoher Blindleistungsanteil.

Der bei einem Linearantrieb der hier in Rede stehenden Art üblicherweise notwendige Aufwand für eine herkömmliche induktive Energieübertragung zwischen Fahrweg und bewegtem Teil ist beträchtlich.

Der Erfindung liegt die Aufgabe zugrunde, einen Synchron-Linearantrieb der eingangs genannten Art anzugeben, bei dem mit vergleichsweise geringem zusätzlichen Aufwand elektrische Energie auf das bewegte Teil übertragen werden kann, wobei diese Energie entweder zur Bereitstellung des Gleichstroms für die Erregerwicklung oder für Zusatzeinrichtungen an dem bewegten Teil oder für beide Zwecke vorgesehen sein soll.

Bei einem Synchron-Linearantrieb der eingangs genannten Art wird diese Aufgabe erfindungsgemäß gelöst durch Mittel, mit denen dem in die Statorwicklungen eingespeisten, zur Vortriebskrafterzeugung dienenden Wechselstrom ein höherfrequenter Wechselstrom überlagert wird, und eine am Erregerteil vorgesehene Einrichtung zum Auskoppeln der von dem höherfrequenten Wechselstrom in der Erregerwicklung induzierten Energie, oder Mittel, mit denen dem in die Erregerwicklung eingespeisten Gleichstrom ein höherfrequenter Wechselstrom überlagert wird, und eine am Stator vorgesehene Einrichtung zum Auskoppeln der von dem höherfrequenten Wechselstrom induzierten Energie.

Der Begriff "höherfrequent" bedeutet hier, daS die Frequenz dieses höherfrequenten Wechselstroms wesentlich größer ist als die Frequenz des zur Vortriebskrafterzeugung eingespeisten Wechselstroms. Die "höhere" Frequenz ist beispielsweise um das 10-fache höher als die Frequenz des Antriebs-Wechselstroms.

Synchron-Linearmotoren mit an dem bewegten Teil befindlicher Erregerwicklung haben die Eigenschaft, daS am Fahrzeug selbst keine Antriebs-Energieversorgung benötigt wird. Die für den Antrieb des bewegten Teils erforderliche Energie wird in die Statorwicklung eingespeist. In die Erregerwicklung am bewegten Teil muß lediglich die zur Erregung erforderliche Energie eingespeist werden. Erfindungsgemäß nutzt man die bei einem Synchron-Linearmotoren ohnehin vorhandenen Grundelemente auch für die Übertragung von Energie mit aus.

Bekanntlich wird bei einem Synchron-Linearmotor im Stator ein mehrphasiger Drehstrom oder mehrere einphasige, zueinander phasenversetzte Wechselströme benötigt, die in die Wicklung bzw. Wicklungen eingespeist werden, um ein Wanderfeld für den Vortrieb des Fahrzeugs zu erzeugen. Diesem Wechselstrom wird erfindungsgemäß der höherfrequente Wechselstrom überlagert. Er wird von den ohnehin vorhandenen Einrichtungen für die Einspeisung des Statorstroms bereitgestellt.

Von dem zur Vortriebskraft erzeugten Wanderfeld wird in der Erregerwicklung keine Spannung induziert. Lediglich der höherfrequente Wechselstrom wirkt transformatorisch auf die Erregerwicklung. Damit kann aus der Erregerwicklung Energie ausgekoppelt werden. Diese Energie kann - wie gesagt - zur Einspeisung von Gleichstrom in die Erregerwicklung genutzt werden, und/oder man kann mit der aus der Erregerwicklung ausgekoppelten Energie andere Einrichtungen am Fahrzeug speisen.

Durch den höherfrequenten Stromanteil ergeben sich entsprechende Änderungen des Induktionsflusses durch die Erregerwicklung.

Bei einem Synchron-Linearmotor werden erfindungsgemäß als Mittel zur Einspeisung des höherfrequenten Wechselstroms die zur Statorstromeinspeisung ohnehin vorhandenen Wechsselrichteranordnungen verwendet.

Wenn sich das bewegte Teil des Synchron-Linearantriebs, im folgenden auch als "Fahrzeug" bezeichnet, entlang dem Langstator bewegt, befindet sich die Erregerwicklung des Fahrzeugs stets in einer neuen Lage gegenüber dem Stator. Es existiert also eine periodische Kopplung zwischen der Statorwicklung und der Erregerwicklung. Die üblichen Synchron-Linearantriebe sind aber ohnehin mit einer mehrphasigen Statorwicklung versehen, damit der Antrieb praktisch in jeder beliebigen Position des Fahrzeugs wirksam und gleichmäßig ist. Damit ist es erfindungsgemäß auch möglich, eine unterbrechungsfreie Energieübertragung entlang dem mehrphasige Statorwicklungen tragenden Stator zu erhalten.

Nach jeder Bewegung des Fahrzeugs um einen der Phasenzahl entsprechenden Bruchteil der Polteilung des Stators existiert eine optimale Kopplung zwischen einer Phasenwicklung und der Erregerwicklung. Es ist also praktisch zu jedem Zeitpunkt über eine der Phasenwicklungen eine Energieübertragung möglich.

Zum Einstellen des Statorstroms sind üblicherweise Wechselrichter vorhanden, die abhängig von der Lage des Fahrzeugs einzelne Abschnitte des Stators versorgen. Erfindungsgemäß werden diese Wechselrichter auch zur Einspeisung des höherfrequenten Wechselstroms verwendet. Wie oben erwähnt, sind bei üblichen Synchron-Linearantrieben mehrere Statorabschnitte vorgesehen, so daß lediglich nur in den Statorabschnitt Strom eingespeist wird, in welchem sich das Fahrzeug befindet. Erfindungsgemäß sind nun die einzelnen Abschnitte vorzugsweise nicht länger als der Erregerabschnitt des bewegten Teils (Fahrzeugs). Ist der Statorabschnitt wesentlich länger als der Erregerabschnitt, so sinkt, bei vorgegebener maximaler Blindleistung, die übertragene Nutzleistung. Eine günstige Energieübertragung ergibt sich dann, wenn man eine Einzelspeisung von hinreichend kurzen Statorabschnitten vorsieht, so daß der nicht vom Erregerteil überlappte Längenabschnitt nur geringen Einfluß auf die Energieübertragung hat.

Nach der ersten Alternative wird also der höherfrequente Wechselstrom dem Antriebs-Wechselstrom über-lagert. Alternativ wird der höherfrequente Wechselstrom dem in die Erregerwicklung eingespeisten Gleichstrom überlagert, wobei dann die Einrichtung zum Auskoppeln der über den höherfrequenten Wechselstrom induzierten Energie am Stator vorgesehen ist. Die Erregerwicklung kann an der Strecke vorgesehen sein, während der Stator sich am Fahrzeug befindet. In letztgenanntem Fall umfassen die Mittel zur Einspeisung oder Auskopplung des höherfrequenten Wechselstroms die zur Erregerstromeinspeisung vorgesehene Pulsstromrichteranordnung.

Im Erregerteil sind zur Führung des magnetischen Flusses zweckmäßigerweise Eisenelemente vorgesehen. Um Wirbelstromverluste zu vermeiden, werden diese Eisenelemente z.B. als geblechte Elemente ausgeführt.

Ausgehend von dem Zustand, bei dem in der Erregerwicklung durch den höherfrequenten Wechselstromanteil im Stator eine Spannung induziert ist, muß die eingekoppelte Energie aus der Erregerwicklung am Fahrzeug ausgekoppelt werden.

Hierzu sieht die Erfindung in einer ersten, passiven, Anordnung vor, daS zum Auskoppeln im Erregerteil eine Gleichrichteranordnung vorgesehen ist, und daß gegebenenfalls zur Einspeisung des Erregergleichstroms ein Stellglied vorgesehen ist. Es handelt sich im Prinzip um einen üblichen Gleichrichter. Die jetzt auf der Erregerseite erforderliche Blindleistung, bedingt durch sekundärseitige Streuinduktivitäten und anteilige Hauptinduktivität, müssen auf der Seite des Stators bereitgestellt und über den Luftspalt übertragen werden.

Es ist effizienter, die erregerseitig erforderliche Blindleistung auch auf der Seite des Erregers zu erzeugen. Bezogen auf das Bild des aufgeschnittenen Transformators heißt dies, daß Blindleistung anteilig sekundärseitig erzeugt werden soll, um den Gesamt-Blindleistungsanteil zu minimieren. Im Extremfall wird unter Inkaufnahme erhöhter Gesamtblindleistung die Blindleistung ausschließlich erregerseitig erzeugt. Dadurch reduziert man den streckenseitigen Installationsaufwand.

Eine dieses leistende Auskoppeleinrichtung auf der Seite des Erregerteils enthält einen Pulsstromrichter zur Einstellung des Erregergleichstroms. Dies bedeutet im Gegensatz zu der oben angesprochenen passiven Gleichrichtung eine "aktive" Gleichrichtung. Der Pulsstromrichter übernimmt sowohl die Gleichrichtung des induzierten höherfrequenten Stromanteils als auch die Einstellung des Gleichstroms, der in die Erregerwicklung eingespeist wird.

Der für die Energieübertragung benötigte, höherfrequente Wechselstrom wird durch das Zwischentakten des Wechselrichters erzeugt. Hierbei ist zu beachten, daß das von dem Pulsstromrichter bewirkte Zwischentakten synchron und phasenrichtig zu der von der Statorseite induzierten Spannung ist.

Erfindungsgemäß erfolgt die Einspeisung des höherfrequenten Wechselstroms in die Statorwicklungen mit einer um 180° umschaltbaren Phasenlage. Bei einer einphasigen, von einem Stromrichter gespeisten Erregerwicklung muß der höherfrequente Wechselstrom gleichphasig auf die Erregerwicklung wirken, damit keine gegenseitige Auslöschung stattfindet. Bei jedem Polwechsel im Erregerteil muß der höherfrequente Wechselstrom der Statorwicklung in der Phase um 180° gedreht werden. Dann aber sind Frequenz und Phasenlage der Spannungen in der Erregerwicklung unabhängig von der Bewegung des Fahrzeugs gegenüber dem Stator.

In der Erregerwicklung addieren sich die höherfrequenten Anteile aus räumlich versetzten und verschiedene Phasen aufweisenden Statorwicklungen. Damit erfolgt eine lückenlose Energieübertragung.

Durch die aktive Gleichrichtung am Erregerteil läßt sich die Flußrichtung der Leistung umkehren, d. h. man kann Energie vom Fahrzeug in den Stator einkoppeln.

Grundsätzlich laßt sich die zu übertragende Wirkleistung durch entsprechende Einstellung des Phasenwinkels zwischen der erregerseitigen Taktfrequenz und der statorseitigen Taktfrequenz einstellen.

Wie oben ausgeführt, erfolgt die Energieübertragung bei einem Synchron-Linearmotor durch höherfrequenten Wechselstrom vom Stator auf die Erregerwicklung im bewegten Teil (Fahrzeug). Hierzu werden statorseitig die ohnehin vorhandenen Einzelwicklungen oder Mehrphasen-Wicklungen und die zu einzelnen Statorabschnitten gehörigen Wechselrichteranordnungen verwendet. Darüber hinaus kann man auch gesonderte Stromrichter, Generatoren und dergleichen vorsehen, die unabhängig von den für den Antrieb vorhandenen Bauteilen sind.

Durch die Erfindung ist also eine vom Stator zum Erregerteil oder umgekehrt gerichtete Leistungsübertragung möglich, wobei vorzugsweise die für den Antrieb ohnehin vorhandenen Bauelemente genutzt werden.

Im folgenden wird ein Ausführungsbeispiel der Erfindung anhand der Zeichnung näher erläutert. Es zeigen:
- Figur 1: eine schematische Darstellung des Stromverlaufs in der Statorwicklung und der Erregerwicklung eines Synchron-Linearmotors
- Figur 2: eine schematische Darstellung eines Erregerteils am Fahrzeug eines Synchron-Linearantriebs sowie eines dem Erregerteil gegenüberliegenden Statorabschnitts
- Figur 3: ein Prinzipschaltbild eines Synchron-Linearmotors mit einer Einrichtung zum induktiven Einspeisen von Energie in den Erregerteil

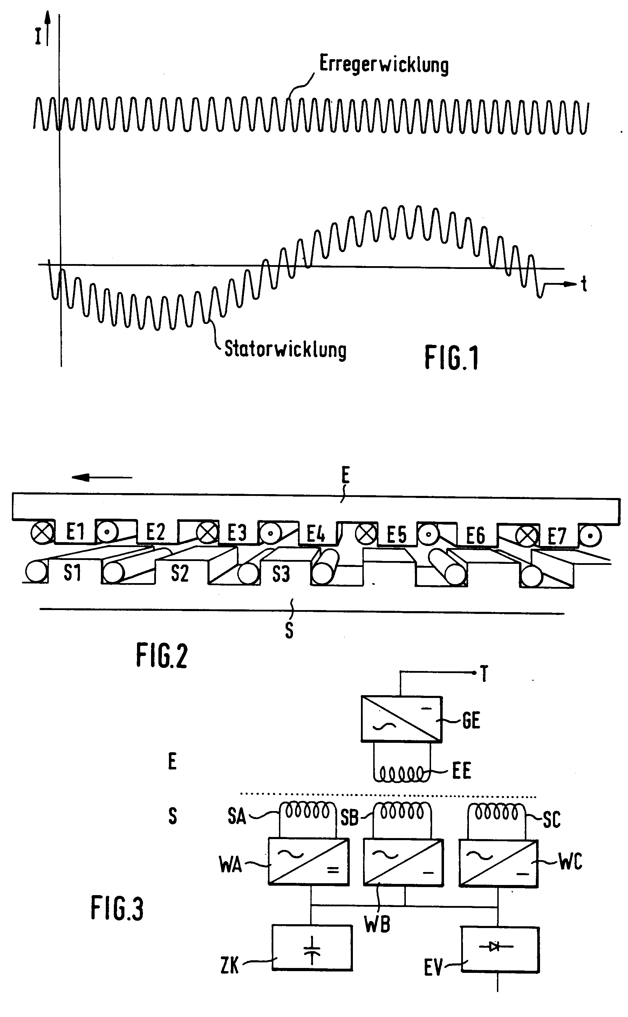

Figur 3 zeigt schematisch die Anordnung eines Synchron-Linearantriebs mit einem unterhalb der gestrichelten Linie allgemein dargestellten Langstator S, bestehend aus mehreren hintereinander angeordneten Statorabschnitten mit jeweils einer Statorwicklung SA, SB und SC, die ihrerseits jeweils mit einem Wechselrichter WA, WB bzw. WC verbunden sind. Die Wechselrichter werden von einer Energieversorgung EV über einen Zwischenkreis ZK gespeist. Dabei werden die Statorwicklungen der einzelnen Abschnitte von einer nicht dargestellten Steuerung derart angesteuert, daS lediglich die Statorwicklung mit Strom gespeist wird, über der sich die Erregerwicklung EE des Fahrzeugs befindet. Im Erregerteil ist die Erregerwicklung EE an einen Gleichrichter GE angeschlossen, an dessen Ausgang Energie ausgekoppelt werden kann. Diese Energie steht für verschiedene Hilfseinrichtungen am Fahrzeug des Synchron-Linearantriebs zur Verfügung. Alternativ oder zusätzlich steht die in die Erregerwicklung EE induktiv eingekoppelte Energie als Speiseenergie für die Erregerwicklung zur Verfügung.

Zur Erregung wird in die Erregerwicklung ein Gleichstrom eingespeist. Das Wanderfeld wird durch die Einzelwicklung des Stators, also hier die Statorwicklungen SA, SB und SC, erzeugt.

Die Wechselrichter WA, WB und WC sowie die daran angeschlossene, nicht dargestellte Steuerung bewirken außer der Erzeugung eines Wanderfelds, daS dem zur Erzeugung des Wanderfelds dienenden, eine relativ niedrige Frequenz aufweisenden Wechselstrom ein höherfrequenter Wechselstrom überlagert wird. Während der niederfrequente Wechselstrom lediglich zur Bereitstellung der Energie für die Vortriebskraft dient, in der Erregerwicklung EE jedoch keine Spannung induziert, dient der höherfrequente Wechselstromanteil zum Induzieren einer Spannung in der Erregerwicklung EE, die man als Sekundärwicklung eines Transformators betrachten kann, der aus jeweils einer Statorwicklung, hier der Statorwicklung SB, und der Erregerwicklung EE sowie dem dazwischen befindlichen Luftspalt besteht.

Figur 1 zeigt den Stromverlauf in der Statorwicklung (unterer Verlauf) und in der Erregerwicklung (oberer Verlauf). Man erkennt, daß dem niederfrequenten Wechselstrom, der für den Vortrieb in die einzelnen Statorwicklungen eingespeist wird, ein höherfrequenter Wechselstrom überlagert ist. Dieser höherfrequente Wechselstrom sorgt für die induktive Einkopplung von Energie in die Erregerwicklung. Dort wird ein Wechselstrom induziert, der lediglich durch die Grundwelle des zur Erzeugung des Wanderfeldes bereitgestellten, niederfrequenten Wechselstroms verstimmt ist.

Figur 2 zeigt schematisch einen Teil des Stators S und den Erregerteil E. Der Erregerteil wird in Figur 2 nach links bewegt, indem im Stator S ein Wanderfeld und im Erregerteil ein statisches Magnetfeld durch Gleichstromeinspeisung erzeugt wird.

Gemäß der Darstellung in Figur 2 stehen sich am Erregerteil ein Pol E1 und am Stator ein Pol S2 gegenüber. In diesem Bereich erfolgt eine optimale Einkopplung des höherfrequenten Anteils seitens des Stators in die Erregerwicklung. Es erfolgt auch eine Kopplung zwischen S1 und E2, diese ist jedoch schwächer, wird aber mit zunehmender Annäherung zwischen S1 und E2 stärker. Durch positionsabhängige Phasenumschaltung des höherfrequenten, zur Energieübertragung dienenden Wechselstroms wird erreicht, daS in der Erregerwicklung stets ein gleichphasiger Wechselstrom induziert wird, sich die Anteile aus den einzelnen Bereichen also addieren.

Die in Figur 2 dargestellten Elemente sind bei einem üblichen Synchron-Linearmotor ohnehin vorhanden.

In einer abgewandelten Ausführungsform der Erfindung können zusätzlich zu den bei einem Synchron-Linearmotor ohnehin vorhandenen Elementen zusätzliche Wicklungen vorgesehen sein, insbesondere Wicklungen am Erregerteil.

Der in Figur 3 schematisch dargestellte Gleichrichter GE dient als sogenannter aktiver Gleichrichter. Außer der Funktion, den höherfrequenten Wechselstrom, der in die Erregerwicklung induziert wird, gleichzurichten, hat der Gleichrichter außerdem noch die Funktion, den in die Erregerwicklung einzuspeisenden Gleichstrom einzustellen. Durch entsprechende Einstellung des Energieflusses laßt sich auch eine umgekehrte Energieübertragung erreichen, also eine Übertragung von Energie von dem Erregerteil E in den Stator S.

Bei einer weiteren Ausführungsform der Erfindung sind die oben erläuterten und in Figur 3 skizzierten Verhältnisse umgekehrt: Der "Stator" befindet sich am Fahrzeug, während sich an der Strecke Erregerwicklungen befinden. Das Wanderfeld wird dann am Fahrzeug erzeugt.

## Patentansprüche

1. Synchron-Linearantrieb, mit einem vorzugsweise als am Fahrweg angeordneter Langstator ausgebildeten Stator (S) mit Statorwicklungen (SA, SB, SC) zur Erzeugung eines Wanderfeldes für den Antrieb des bewegten Teils (E), und einem vorzugsweise am bewegten Teil vorhandenen Erregerteil mit gleichstromgespeister Erregerwicklung (EE), wobei elektrische Energie zur Bordstromversorgung auf das bewegte Teil induktiv über die Statorwicklungen übertragen wird,
gekennzeichnet durch,
Mittel (WA, WB, WC), mit denen dem in die Statorwicklungen (SA, SB, SC) eingespeisten, zur Vortriebskrafterzeugung dienenden Wechselstrom ein höherfrequenter Wechselstrom überlagert wird, und eine am Erregerteil vorgesehene Einrichtung (GE, T) zum Auskoppeln der von dem höherfrequenten Wechselstrom in der Erregerwicklung induzierten Energie, oder Mittel, mit denen dem in die Erregerwicklung eingespeisten Gleichstrom ein höherfrequenter Wechselstrom überlagert wird, und eine am Stator vorgesehene Einrichtung zum Auskoppeln der von dem höherfrequenten Wechselstrom induzierten Energie.

2. Synchron-Linearantrieb nach Anspruch 1, bei dem die Mittel zur Einspeisung oder Auskopplung des höherfrequenten Wechselstroms die zur Statorstromeinspeisung vorgesehene Wechselrichteranordnung (WA, WB, WC) umfassen.

3. Synchron-Linearantrieb nach Anspruch 1, bei dem die Mittel zur Einspeisung oder Auskopplung des höherfrequenten Wechselstroms die zur Erregerstromeinspeisung vorgesehene Pulsstromrichteranordnung umfassen.

4. Synchron-Linearantrieb nach Anspruch 1, 2 oder 3 bei dem in dem Stator abschnittsweise dort, wo sich die Erregerwicklung (EE) befindet, Strom eingespeist wird, wobei die einzelnen Abschnitte (SA, SB, SC) vorzugsweise hinreichend kurz sind, so daS der nicht vom Erregerteil überlappte Längenabschnitt nur geringen Einfluß auf die Energieübertragung hat.

5. Synchron-Linearantrieb nach einem der Ansprüche 1 bis 4,
**dadurch gekennzeichnet,**
daß die in der Erregerwicklung (EE) durch den höherfrequenten Wechselstrom induzierte Energie zur Gleichstromspeisung der Erregerwicklung (EE) verwendet wird.

6. Synchron-Linearantrieb nach einem der Ansprüche 1 bis 5,
**dadurch gekennzeichnet,**
daß die in der Erregerwicklung durch den höherfrequenten Wechselstrom induzierte Energie zur Versorgung von an dem bewegten Teil befindlichen Hilfseinrichtungen verwendet wird.

7. Synchron-Linearantrieb nach Anspruch 1 und 3,
**dadurch gekennzeichnet,**
daß die durch den höherfrequenten Wechselstrom in dem Stator induzierte Energie zur Erzeugung des Wanderfeldstroms verwendet wird.

8. Synchron-Linearantrieb nach einem der Ansprüche 1 bis 7,
**dadurch gekennzeichnet,**
daS zur Auskopplung im Erregerteil eine Gleichrichteranordnung (GE) vorgesehen ist, und daß zur Einspeisung des Erregergleichstroms ein Stellglied vorgesehen ist.

9. Synchron-Linearantrieb nach einem der Ansprüche 1 bis 7,
**dadurch gekennzeichnet,**
daS zur Auskopplung im Erregerteil ein Pulsstromrichter vorgesehen ist, der den höherfrequenten induzierten Stromanteil gleichrichtet und den Gleichstrom für die Erregerwicklung einstellt.

10. Synchron-Linearantrieb nach einem der Ansprüche 1 bis 9,
**dadurch gekennzeichnet,**
daS die Einspeisung des höherfrequenten Wechselstroms in die Statorwicklungen (SA, SB, SC) mit einer 180°-Phasenumschaltung erfolgt.

11. Synchron-Linearmotor nach einem der Ansprüche 1 bis 10,
**dadurch gekennzeichnet,**
daS die Auskoppeleinrichtung an die Erregerwicklung angeschlossen ist.

12. Synchron-Linearantrieb nach einem der Ansprüche 1 bis 10,
**dadurch gekennzeichnet,**
daS im Erregerteil zusätzliche Wicklungen für die induktive Energieübertragung vorhanden sind.

13. Synchron-Linearnantrieb nach einem der Ansprüche 1 bis 12,
**dadurch gekennzeichnet,**
daS am Stator zusätzliche Speise- und Kuppelvorrichtungen für die Energieübertragung vorhanden sind.

## Claims

1. A synchronous linear drive comprising a stator (S) which is designed preferably as a long stator disposed along the travel path and which has stator windings (SA, SB, SC) for generating a travelling field for driving the moving part (E), and comprising an exciter part which is preferably provided on the moving part and has a d.c. powered exciter winding (EE), with electrical energy for on-board currrent supply being inductively transferred to the moving part via the stator windings,
**characterized by**
means (WA, WB, WC) through which an alternating current of higher frequency is superimposed on the alternating current fed into the stator windings (SA, SB, SC) and serving for generating the propulsive force, and a means (GE, T) provided on the exciter part for coupling out the energy induced by the alternating current of higher frequency in the exciter winding, or means through which an alternating current of higher frequency is superimposed on the direct current fed into the exciter winding, and a means provided on the stator for coupling out the energy induced by the alternating current of higher frequency.

2. The synchronous linear drive of claim 1,
wherein the means for feeding or coupling out the alternating current of higher frequency comprise the inverter arrangement (WA, WB, WC) provided for stator current feeding.

3. The synchronous linear drive of claim 1,
wherein the means for feeding or coupling out the alternating current of higher frequency comprise the pulse current rectifier arrangement provided for excitation current feeding.

4. The synchronous linear drive of claim 1, 2 or 3,
wherein current is fed to those sections in the stator where the exciter winding (EE) is provided, with the individual sections (SA, SB, SC) being preferably sufficiently short so that the longitudinal section not overlapped by the exciter part has only little influence on the energy transfer.

5. The synchronous linear drive of any of claims 1 to 4,
characterized in that the energy induced in the exciter winding (EE) by the alternating current of higher frequency is used for direct current feeding of the exciter winding (EE).

6. The synchronous linear drive of any of claims 1 to 5,
characterized in that the energy induced in the exciter winding by the alternating current of higher frequency is used for feeding auxiliary means provided on the moving part.

7. The synchronous linear drive of claims 1 and 3,
characterized in that the energy induced in the stator by the alternating current of higher frequency is used for generating the travelling field current.

8. The synchronous linear drive of any of claims 1 to 7,
characterized in that a rectifier arrangement (GE) is provided for coupling out in the exciter part, and in that a controller is provided for feeding the exciter direct current.

9. The synchronous linear drive of any of claims 1 to 7,
characterized in that a pulse current rectifier is provided for coupling out in the exciter part, said pulse current rectifier rectifying the induced current share of higher frequency and adjusting the direct current for the exciter winding.

10. The synchronous linear drive of any of claims 1 to 9,
characterized in that feeding of the alternating current of higher frequency into the stator windings (SA, SB, SC) takes place with a 180° phase reversal.

11. The synchronous linear drive of any of claims 1 to 10,
characterized in that the means for coupling out is connected to the exciter winding.

12. The synchronous linear drive of any of claims 1 to 10,
characterized in that the exciter part is provided with additional windings for the inductive energy transfer.

13. The synchronous linear drive of any of claims 1 to 12,
characterized in that the stator is provided with additional feeding and coupling means for the energy transfer.

## Revendications

1. Entraînement linéaire synchrone avec un stator (S) réalisé sous la forme de stator long,disposé sur la course de déplacement, avec des enroulements de stator (SA,SB,SC) destinés à générer un champ d'ondes progressives pour l'entraînement de la partie déplacée (E) et une partie excitatrice, disposée de préférence sur la parrie déplacée, avec un enroulement excitateur (EE), alimenté en courant continu, l'énergie électrique destinée à l'alimentation électrique de bord étant transmise sur la partie déplacée par voie inductive par l'intermédiaire des enroulements de stator, caractérisé par les moyens (WA, WB, WC), à l'aide desquels un courant alternatif haute fréquence est superposé au courant alternatif injecté dans les enroulements de stator (SA, SB, SC), servant à générer la force de propulsion, et par un dispositif (GE, T), prévu sur la partie excitatrice, destiné à opérer le découplage de l'énergie induite dans l'enroulement excitateur par le courant alternatif haute fréquence, ou des moyens à l'aide desquels un courant alternatif haute fréquence est superposé au courant continu injecté dans l'enroulement excitateur, et par un dispositif prévu sur le stator, pour opérer le découplage de l'énergie induite par le courant alternatif haute fréquence.

2. Entraînement linéaire synchrone selon la revendication 1, dans lequel les moyens destinés à injecter ou découpler le courant alternatif haute fréquence comprennent le dispositif redresseur (WA, WB, WC) prévus pour l'infection du courant de stator.

3. Entraînement linéaire synchrone selon la revendication 1, dans lequel les moyens destinés à effectuer l'injection ou le découplage du courant alternatif haute fréquence comprennent le dispositif redresseur de courant pulsé prévu pour l'injection du courant excitateur.

4. Entraînement linéaire synchrone selon la revendication 1, 2 ou 3, dans lequel, dans le stator, par sections, là où se trouve l'enroulement extérieur (EE), est injecté du courant, les différentes sections (SA, SB, SC) étant, de préférence, suffisamment courtes pour que la section non chevauchée par la partie excitatrice n'ait qu'une influence limitée sur la transmission de l'énergie.

5. Entraînement linéaire synchrone selon les revendications 1 à 4, caractérisé en ce que l'énergie, induite dans l'enroulement excitateur (EE) par le courant alternatif haute fréquence, est utilisée pour l'injection de courant continu de l'enroulement excitateur (EE).

6. Entraînement linéaire synchrone selon l'une des revendications 1 à 5, caractérisé en ce que l'énergie induite dans l'enroulement excitateur par le courant alternatif haute fréquence est utilisée pour alimenter les dispositifs auxiliaires se trouvant dur la partie déplacée.

7. Entraînement linéaire synchrone selon les revendications 1 et 3, caractérisé en ce que l'énergie, induite par le courant alternatif haute fréquence dans le stator, est utilisée pour la génération du courant de champ d'ondes progressives.

8. Entraînement linéaire synchrone selon l'une des revendications 1 à 7, caractérisé en ce qu'est prévu pour effectuer le découplage dans la partie excitatrice in dispositif redresseur (GE), et en ce qu'un organe de réglage est prévu pour effecteur l'injection du courant continu d'excitation.

9. Entraînement linéaire synchrone selon l'une des revendications 1 à 7, caractérisé en ce que, pour effectuer le découplage, est prévu dans la partie excitatrice un redresseur de courant à impulsions qui redresse la partie du courant induite à haute fréquence, et règle le courant continu destiné à l'enroulement excitateur.

10. Entraînement linéaire synchrone selon l'une des revendications 1 à 9, caractérisé en ce que l'injection du courant alternaiif haute fréquence s'effectue dans les enroulements (SA, SB, SC) avec une commutation de phase de 180°.

11. Moteur linéaire synchrone selon l'une des revendications 1 à 10, caractérisé en ce que le dispositif de découplage est raccordé à l'enroulement excitateur.

12. Moteur linéaire synchrone selon l'une des revendications 1 à 10, caractérisé en ce que, dans la partie excitatrice, sont prévus des enroulements supplémentaires, destinés a la transmission par voie inductive de l'énergie.

13. Moteur linéaire synchrone selon l'une des revendications 1 à 12, caractérisé en ce que sur le stator sont prévus des dispositifs d'alimentation et de découplage supplémentaires pour la transmission de l'énergie.
